# EUROPEAN PATENT APPLICATION

(11) **EP 1 820 402 A1**
(43) Date of publication of application: **22.08.2007**
(21) Application number: 05799718.1
(22) Date of filing: 23.09.2005
(51) Int. Cl.: A21D 13/00, A23L 1/16

(54) **IMPROVED PIZZA**

(30) Priority: 01.10.2004 ES 200402236 U
(71) Applicant: Lazarillo De Tormes, S.l., 37900 Santa Marta de Tormes - SALAMANCA (ES)
(72) Inventor: SANCHEZ ZARZOSO, MARIA ISABEL, E-37900 Santa Marta de Tormes - SALAMANC (ES)
(74) Representative: Urizar Anasagasti, Jesus Maria
(86) International application number: PCT/ES2005/070132
(87) International publication number: WO 2006/037832

(57) **Abstract**

The invention relates to an improved pizza in which a dough grid arises from its dough base, which grid is made of the same dough and completely covers the surface of the pizza occupied by the components, preventing the latter from being separated therefrom.

## Description

### Object of the Invention

The object of the present invention patent is to set forth a new improved pizza, the improvement of which consists of incorporating a dough grid over the components of the real pizza, thus preventing them from being spilled. This invention patent is useful for the food and agriculture industry.

### Background of the Invention

Up until now, traditional pizzas are formed by a base, normally based on wheat flours, and by several components with as much variety as the flavors that are to be included in the pizza. These components are placed on the real pizza without any type of special attachment, because they are not integrated on the base. This is a problem to a great extent, because special care must be taken to not overturn these components, both before and after cooking the pizza.

### Description of the Invention

The improved pizza object of the present invention patent is set forth to palliate or minimize the aforementioned problem.

This improvement basically consists of incorporating a dough grid, with a dough identical to that of the base, to the pizza and over its components, such that both when the pizza has still not been cooked and when it has been cooked, the grid serves as retention for the components incorporated to the pizza, the dough grid being integrated with the dough itself of the base, arising from it and additionally, when the pizza is baked, the dough of the grid hardens and becomes crisp, improving the texture of the pizza.

### Description of the Drawings

To complement the description which is being made and for the purpose of aiding to better understand the features of the invention patent, a set of drawings is attached herein in which the following has been shown with an illustrative and non-limiting character:

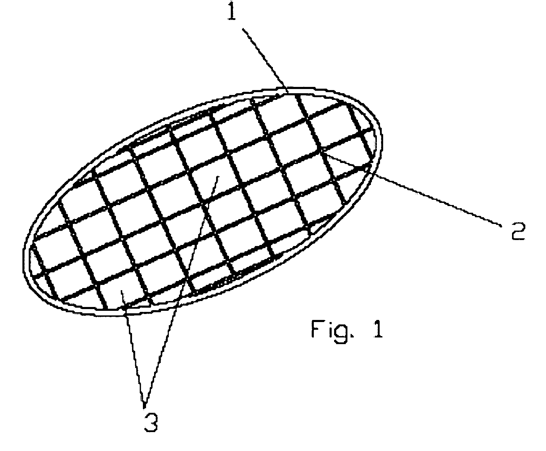

Figure 1 shows a schematic view of the improved pizza object of the present invention patent.

### Preferred Embodiment of the Invention

As can be seen in the attached figure, the improved pizza object of the present invention patent is formed by a base (1) from which a dough grid (2) arises, which grid completely covers the surface of the pizza occupied by the components (3).

Having sufficiently described the nature of the present invention, as well as a way of putting it into practice, it must only be added that the shape and materials of said invention can be varied, provided that said alterations do not substantially vary the features that are claimed below.

## Claims

1. An improved pizza **characterized in that** a dough grid (2) arises from its dough base (1), which grid completely covers the surface of the pizza occupied by the components (3).

2. An improved pizza according to claim 1, **characterized in that** the base (1) and the grid (2) are formed by the same dough.
